# EUROPEAN PATENT APPLICATION

(11) **EP 3 594 834 A1**
(43) Date of publication of application: **15.01.2020**
(21) Application number: 18764080.0
(22) Date of filing: 05.01.2018
(51) Int. Cl.: G06F 21/32, G06K 9/00, G06F 21/45

(54) **CONTACTLESS MULTIPLE BODY PART RECOGNITION METHOD AND MULTIPLE BODY PART RECOGNITION DEVICE, USING MULTIPLE BIOMETRIC DATA**

(30) Priority: 10.03.2017 KR 20170030421
(71) Applicant: Crucialtec Co., Ltd., Seongnam-si, Gyeonggi-do 13486 (KR); Crucialtrak, Inc, Seongnam-si, Gyeonggi-do 13486 (KR)
(72) Inventor: OH, Dong Hyun, Seoul 01169 (KR); HAN, Yong Hee, Gwangju-si Gyeonggi-do 12772 (KR); LEE, Dong Ho, Seongnam-si Gyeonggi-do 13556 (KR)
(74) Representative: Zardi, Marco
(86) International application number: PCT/KR2018/000260
(87) International publication number: WO 2018/164364

(57) **Abstract**

A contactless multiple body part recognition method using multiple biometric data according to an embodiment of the present invention comprises: a step of acquiring biometric data from a user in a contactless state when the user is detected within a preconfigured measurable range, and then comparing the acquired biometric data with preregistered biometric data, thereby performing user authentication for the biometric data; and a step of putting together the user authentication result of the biometric data and, if the user authentication result of the biometric data satisfies a preconfigured condition, then determining the user as an authorized user, wherein, in the step of acquiring the biometric data from the user in a contactless state when the user is detected within the preconfigured measurable range, and then comparing the acquired biometric data with the preregistered biometric data, thereby performing user authentication for the biometric data, when the user approaches, biometric data of a face and an iris are acquired from the user in a contactless state by way of a physical movement of a camera.

## Description

### TECHNICAL FIELD

The present invention relates to a contactless multiple body part recognition method using multiple biometric data and a multiple body part recognition device, and more specifically, to a contactless multiple body part recognition method using multiple biometric data and a multiple body part recognition device, which can enhance the success rate and speed of recognizing biometric data using a multiple body part recognition technique of acquiring a plurality of biometric data and performing user identification.

### BACKGROUND ART

Generally, a body part recognition technique is a technique of measuring physical or behavioral characteristics of a living person using an automated device and utilizing the characteristics as a personal identification means.

Body part recognition may be divided into physical characteristic recognition and behavioral characteristic recognition. The physical characteristic recognition includes fingerprint recognition, face recognition, iris recognition, vein recognition, retina recognition, hand geometry recognition and the like, and the behavioral characteristic recognition includes voice recognition, gait recognition, signature recognition and the like.

Particularly, the physical characteristic recognition among the body part recognition has been developed from a time relatively long before and is utilized as a security technique in various fields such as finance, access control, medical welfare, public affairs, quarantine, entertainment and the like.

Recently, security techniques using a plurality of physical characteristic recognition devices are used to raise security level. Representatively, the physical characteristic recognition devices include a face recognition device, an iris recognition device and the like.

The face recognition device is a device for taking face images of a user through a camera and performing user authentication by comparing the photographed face images with images registered in a server, and it is advantageous in that the user is less resistant to using the camera, and post-tracking is possible by photos of the user naturally submitted for review.

In addition, the iris recognition device is a device for acquiring iris images by photographing the eyes of a user and performing user authentication using the acquired iris images, and it is advantageous in that the accuracy is statistically higher than that of DNA analysis, replication is almost impossible, and the iris can be recognized although the user wears glasses. In addition, the iris recognition technique may have a high security level since the iris almost does not change for the lifetime, except in the cases of suffering from trauma or a very rare disease.

However, when a plurality of physical characteristic recognition devices is used as described above, there is a problem in that the devices are individually installed and occupy a large area of the skin, and in addition, since the user should separately perform a recognition process for each of the devices, the process is complicated, and a long time is required for authentication.

In addition, since a wide-angle camera is applied to the face recognition device and the iris recognition device, resolution of photographed images is lowered, and corners of the photographed images are distorted. Accordingly, since identification of an image is difficult and thus a photographed image cannot be compared with registered images, user authentication cannot be performed.

Meanwhile, conventionally, a face recognition device applying an optical zoom function to a camera to optically enlarge or reduce an object has been developed to solve the problems as described above.

However, since the face recognition device described above is simply capable of only optically enlarging or reducing an object and incapable of correcting face images of a user, a face cannot be recognized if the user is not authenticated at a predetermined location.

In addition, as the camera is fixed at an arbitrary angle, the face recognition device described above cannot recognize a face, although the user is authenticated at a predetermined location, when the user drops the head or bends forward, and in addition, recognition of a face is impossible when the user's face is arranged at a position higher or lower than the photographing range of the camera.

### DISCLOSURE OF INVENTION

### TECHNICAL PROBLEM

Therefore, the present invention has been made in view of the above problems, and it is an object of the present invention to provide a contactless multiple body part recognition method using multiple biometric data and a multiple body part recognition device, which can combine and simultaneously process individual body part recognition techniques and prevent problems such as time consumption, inconveniences, psychological resistance and the like which may occur in the process of registering or identifying biometric information of a user.

Another object of the present invention is to provide a contactless multiple body part recognition method using multiple biometric data and a multiple body part recognition device, which can perform a user authentication process in any situation regardless of movement or a posture of a user and prevent the problems of resolution degradation, image distortion and the like by correcting face images of the user to a recognizable state by physically moving or rotating cameras photographing the face and the iris of the user.

Another object of the present invention is to provide a contactless multiple body part recognition method using multiple biometric data and a multiple body part recognition device, which can lower the probability of user identification failure and identify a user in a speedy and accurate way by performing user identification, when the biometric data is inputted from the user, by comparing all the biometric data acquired from the body of the user with previously registered biometric data in real-time.

The technical problems to be solved by the present invention are not limited to the technical problems mentioned above, and unmentioned other technical problems may be clearly understood by those skilled in the art from the following descriptions.

### TECHNICAL SOLUTION

To accomplish the above objects, according to one aspect of the present invention, there is provided a contactless multiple body part recognition method comprising the steps of: acquiring a plurality of biometric data from a user in a contactless state when the user is sensed within a preset measurable range, and performing user authentication on each biometric data by comparing the acquired biometric data with previously registered biometric data; and integrating a result of the user authentication on each biometric data and determining the user as an authorized user when the result of the user authentication on each biometric data satisfies a condition set in advance, wherein the step of acquiring biometric data from a user in a contactless state when the user is sensed within a preset measurable range, and performing user authentication on each biometric data by comparing the acquired biometric data with previously registered biometric data includes the step of acquiring, when the user approaches, biometric data on a face and an iris from the user in a contactless state through physical movement of a camera.

The step of acquiring biometric data from a user in a contactless state when the user is sensed within a preset measurable range, and performing user authentication on each biometric data by comparing the acquired biometric data with previously registered biometric data may include the steps of: acquiring biometric data on the face from the user and comparing the acquired biometric data with previously registered biometric data; and acquiring biometric data on the iris from the user and comparing the acquired biometric data with the previously registered biometric data, wherein the step of acquiring biometric data on the face from the user and comparing the acquired biometric data with previously registered biometric data and the step of acquiring biometric data on the iris from the user and comparing the acquired biometric data with the previously registered biometric data may be performed at the same time.

The step of acquiring biometric data on the face from the user and comparing the acquired biometric data with previously registered biometric data may include the steps of: acquiring face image data from the user; extracting feature points from the face image data; comparing the feature points extracted from the face image data with feature points extracted from the previously registered biometric data; and determining whether or not the user authentication on the face image is successful on the basis of a result of the comparison between the feature points.

The step of acquiring face image data from the user may include the steps of: acquiring, when the user approaches, the face image of the user by moving or rotating a face recognition camera in a predetermined direction and, at the same time, correcting the acquired face image of the user to a size and a position set in advance; and acquiring the face image data from the corrected face image of the user.

The step of acquiring face image data from the user may be set to compare face image information on the corrected face image of the user with reference image information set in advance, and optically re-correct the corrected face image of the user through a plurality of lenses provided in the face recognition camera when the face image information does not match the reference image information.

The step of acquiring face image data from the user may be set to adjust an amount of light using a pulse-width modulation method when the face image of the user is acquired.

The step of acquiring biometric data on the iris from the user and comparing the acquired biometric data with the previously registered biometric data may include the steps of: acquiring partial or whole iris data from the user; extracting feature points from the iris data; comparing the feature points extracted from the iris data with feature points extracted from the previously registered biometric data; and determining whether or not the user authentication on the iris is successful on the basis of a result of the comparison between the feature points.

The step of acquiring partial or whole iris data from the user may include the steps of: acquiring, when the user approaches, an eye area image of the user by moving or rotating an iris recognition camera in a predetermined direction and, at the same time, correcting the acquired eye area image of the user to a size and a position set in advance; and acquiring the iris data from the corrected eye area image of the user.

The step of acquiring partial or whole iris data from the user may be set to compare eye image information on the corrected eye area image of the user with reference image information set in advance, and optically re-correct the corrected eye area image of the user through a plurality of lenses provided in the iris recognition camera when the eye image information does not match the reference image information.

The step of acquiring partial or whole iris data from the user may be set to adjust an amount of light using a pulse-width modulation method when the eye area image of the user is acquired.

The step of integrating a result of the user authentication on each biometric data and determining the user as an authorized user when the result of the user authentication on each biometric data satisfies a condition set in advance may include the steps of: confirming whether a result of successful user authentication matches a user authentication condition set in advance; and determining whether or not the user is authenticated according to whether a result of successful user authentication matches a user authentication condition set in advance.

According to another aspect of the present invention, there is provided a multiple body part recognition device comprising: a biometric data input unit for acquiring a plurality of biometric data from a user in a contactless state when the user approaches; and a biometric data identification unit for performing user authentication by comparing the plurality of biometric data acquired from the biometric data input unit with previously registered biometric data, wherein the biometric data input unit acquires a plurality of biometric data on a face and an iris from the user through physical movement of a camera when the user approaches.

The biometric data identification unit may individually perform authentication on each biometric data by simultaneously comparing the plurality of biometric data with previously registered biometric data, and determine whether or not the user is authenticated by integrating a result of the authentication on each biometric data.

The biometric data input unit may include: a face recognition means provided with a face recognition camera capable of acquiring face image data by photographing the face of the user when the user approaches the biometric data input unit; and an iris recognition means provided with an iris recognition camera capable of acquiring iris data by photographing an eye of the user when the user approaches the biometric data input unit.

The face recognition means and the iris recognition means may be provided with a pan-tilt driver capable of moving or rotating the face recognition camera and the iris recognition camera in a predetermined direction, respectively, and when the user approaches the biometric data input unit, the face recognition means and the iris recognition means may automatically acquire a face image of the user and an eye area image of the user by driving the pan-tilt drivers, wherein the acquired face image and eye area image of the user are corrected to a size and a position set in advance.

The iris recognition means may acquire partial or whole iris data from the user.

The face recognition means and the iris recognition means may adjust an amount of light using a pulse-width modulation method when the face image of the user and the eye area image of the user are acquired.

The multiple body part recognition device may further comprise: a biometric data registration unit for registering the biometric data in advance; an ID display unit for displaying a result of identification of the biometric data identification unit as an ID; a control unit for controlling the biometric data input unit, the biometric data identification unit, the biometric data registration unit, and the ID display unit; and an accommodation unit for accommodating the biometric data input unit, the biometric data identification unit, the biometric data registration unit, the ID display unit, and the control unit therein.

### ADVANTAGEOUS EFFECTS

In the embodiments of the present invention, recognition and identification of a plurality of body parts can be simultaneously performed by combining independent body part recognition techniques, and an aesthetically superior and user-friendly user interface can be provided.

In addition, time consumption or inconveniences occurring in the biometric data registration or identification process can be reduced, and psychological resistance occurring in the body part recognition process can be reduced. Particularly, a multiple body part recognition device with reduced resistance or discomfort, as its internal devices are not shown to a user, while having a high biometric information recognition rate, can be provided.

In addition, as a face image of a user is corrected to a recognizable state by physically moving or rotating the cameras photographing the face and the iris of the user using a pan-tilt driver, face and iris images of the user can be acquired to have a fixed location and size in any situation regardless of movement or a posture of the user, and the problems of resolution degradation, image distortion and the like can be prevented.

In addition, as iris data can be wholly or partly acquired in the iris recognition process, the security function can be enhanced by applying the same security standard to all users regardless of physical defects of a user.

In addition, when the face and the iris of a user are photographed, resolution and brightness of the images can be constantly maintained at all times by adjusting the amount of light using a pulse-width modulation method according to the size and position of the images.

In addition, the probability of user identification failure can be lowered and speedy user identification can be accomplished as user identification is performed, when a biometric data is inputted from a user, by comparing all the biometric data acquired from the body of the user with previously registered biometric data in real-time.

The effects of the present invention are not limited to the effects mentioned above, and it should be understood that all the effects that can be inferred from the configuration of the present invention disclosed in the detailed description or the claims of the present invention are included.

### BRIEF DESCRIPTION OF THE DRAWINGS

FIG. 1 is a configuration view showing a multiple body part recognition device according to an embodiment of the present invention.
FIG. 2 is an exploded perspective view showing a multiple body part recognition device according to an embodiment of the present invention.
FIG. 3 is a combined perspective view showing a multiple body part recognition device according to an embodiment of the present invention.
FIG. 4 is a combined perspective view showing a multiple body part recognition device according to another embodiment of the present invention.
FIG. 5 is a view showing an authentication process of a user approaching a multiple body part recognition device to pass a gate.
FIG. 6 is a view showing the types of fingerprint data that can be acquired from a multiple body part recognition device according to an embodiment of the present invention.
FIGS. 7 to 15 are views showing a flowchart illustrating a contactless multiple body part recognition method using multiple biometric data according to an embodiment of the present invention.

### BEST MODE FOR CARRYING OUT THE INVENTION

Hereinafter, the present invention will be described with reference to the accompanying drawings. However, the present invention may be implemented in various different forms and accordingly is not limited to the embodiments described herein. In addition, the parts unrelated to the description are omitted from drawings to clearly describe the present invention, and like elements are denoted by like reference numerals throughout the specification.

Throughout the specification, when an element is "connected to (contacts with, touched to, combined with)" another element, it includes a case of "indirectly connecting" the elements with intervention of another element therebetween, as well as a case of "directly connecting" the elements. In addition, when an element includes a constitutional element, it means further including another constitutional element, not excluding another constitutional element, as far as an opposed description is not specially specified.

The terms used herein are for the purpose of describing particular embodiments only and are not intended to limit the present invention. As used herein, singular forms are intended to include plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Hereinafter, the embodiments of the present invention will be described in detail with reference to the accompanying drawings.

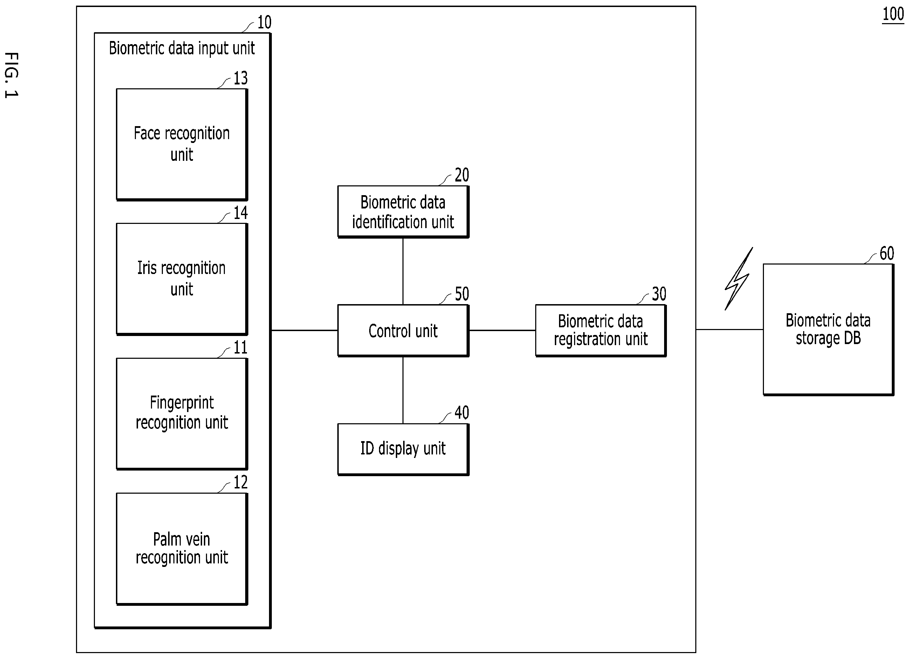

Referring to FIG. 1, a multiple body part recognition device 100 according to an embodiment of the present invention (hereinafter, referred to as a 'multiple body part recognition device 100') is a body part recognition security device for acquiring a plurality of biometric data from a user 1 and identifying the user 1 on the basis of the acquired biometric data when the body of the user 1 approaches in a contactless state, and includes a biometric data input unit 10.

The biometric data input unit 10 acquires a plurality of biometric data from the user 1 approaching the multiple body part recognition device 100.

More specifically, when the user 1 approaches the multiple body part recognition device 100, the biometric data input unit 10 acquires a plurality of biometric data on the face and the iris from the body of the user in a contactless state through physical movement of a camera. Here, the "contactless state" means a state in which a body part (e.g., a finger, a palm or the like) of the user 1 is arranged at a recognizable position apart from the multiple body part recognition device 100 without contacting with multiple body part recognition device 100. In addition, the "physical movement of a camera" means that both a state of moving the camera from one point to another point in a predetermined direction and a state of rotating the camera in a predetermined direction at a predetermined angle.

That is, the biometric data input unit 10 acquires a plurality of biometric data on the face and the iris from the user 1 through physical movement or rotation of the camera provided therein, not through the optical zooming function of the camera. For reference, details of acquiring a plurality of biometric data on the face and the iris from the user 1 through physical movement or rotation of a camera will be described below.

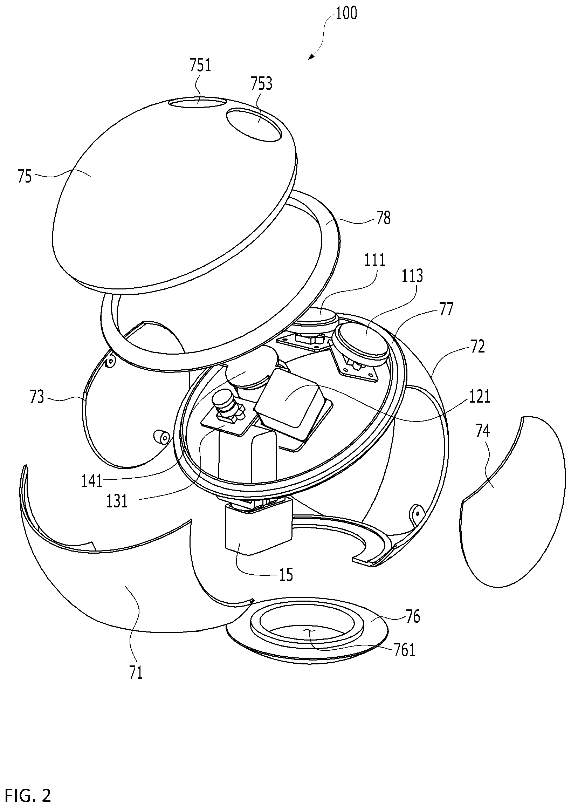

Referring to FIGS. 1 and 2, the biometric data input unit 10 may include a plurality of body part recognition means capable of acquiring biometric data of each body part of the user 1.

More specifically, the biometric data input unit 10 may include a face recognition means 13 and an iris recognition means 14.

When the user 1 approaches the biometric data input unit 10, the face recognition means 13 may acquire face image data from the user 1.

The face recognition means 13 may be provided with a face recognition camera 131.

When the user 1 approaches the multiple body part recognition device 100, the face recognition camera 131 may acquire face image data by photographing the face of the user 1. In addition, a plurality of lenses (not shown) may be provided on the same axis inside the face recognition camera 131 in a structure capable of adjusting distance in the axis direction. In addition, a motor (not shown) coupled to a structure supporting the plurality of lenses may be provided inside the face recognition camera 131 to move the plurality of lenses in the axis direction by rotating the structure. Accordingly, the face recognition camera 131 may optically implement a zooming function.

Here, the face recognition means 13 may be the face recognition camera 131 itself or may be a module including the face recognition camera 131 and a processor (not shown) for processing image data acquired by the face recognition camera 131.

When the user 1 approaches the biometric data input unit 10, the iris recognition means 14 may acquire iris data from the user 1.

The iris recognition means 14 may be provided with an iris recognition camera 141.

When the user 1 approaches the multiple body part recognition device 100, the iris recognition camera 141 may acquire iris data by photographing the eyes of the user 1. In addition, a plurality of lenses (not shown) may be provided on the same axis inside the iris recognition camera 141 in a structure capable of adjusting distance in the axis direction. In addition, a motor (not shown) coupled to a structure supporting the plurality of lenses may be provided inside the iris recognition camera 141 to move the plurality of lenses in the axis direction by rotating the structure. Accordingly, the iris recognition camera 141 may optically implement a zooming function.

Here, the iris recognition means 14 may be the iris recognition camera 141 itself or may be a module including the iris recognition camera 141 and a processor (not shown) for processing image data acquired by the iris recognition camera 141.

Meanwhile, the face recognition means 13 and the iris recognition means 14 may be provided with a pan-tilt driver 15 which can move or rotate the face recognition camera 131 and the iris recognition camera 141 in a predetermined direction.

The pan-tilt driver 15 may be formed in a structure capable of straightly moving forward, backward, left and right, as well as rotating left, right, up and down. For example, the pan-tilt driver 15 may be configured of a plurality of actuators (not shown) and supporting structures (not shown) capable of supporting the face recognition camera 131 and the iris recognition camera 141.

Accordingly, when the user 1 approaches the biometric data input unit 10, the face recognition means 13 and the iris recognition means 14 may automatically acquire a face image of the user and an eye area image of the user by driving the pan-tilt driver 15. At this point, the face image of the user and the eye area image of the user acquired through the face recognition camera 131 and the iris recognition camera 141 may be corrected to a size and a position set in advance.

That is, although the user does not intentionally approach his or her eyes or face to the multiple body part recognition device 100, when the user 1 is positioned within a range set to be capable of acquiring biometric data, the multiple body part recognition device 100 may automatically acquire a face image of the user and an eye area image of the user through physical (mechanical) movement or rotation of the iris recognition camera 141 and the face recognition camera 131 and, at the same time, correct the acquired face image and eye area image of the user to a size and a position set in advance. For example, the iris recognition camera 141 and the face recognition camera 131 may be driven by the same pan-tilt driver 15 or individually driven by different pan-tilt drivers 15.

Meanwhile, the face recognition means 13 and the iris recognition means 14 may be set to optically re-correct the corrected face image of the user and the corrected eye area image of the user through the plurality of lenses provided in the face recognition camera 131 and the iris recognition camera 141 when face image information on the corrected face image of the user and eye image information on the corrected eye area image of the user are different from reference image information set in advance.

That is, when resolution of the corrected face image of the user and the corrected eye area image of the user or the size of the images does not match a resolution or an image size set in advance, the face recognition means 13 and the iris recognition means 14 may perform a re-correction process of enlarging or reducing a corresponding image by adjusting the distance between the lenses provided in each camera.

Meanwhile, the iris recognition means 14 may acquire partial or whole iris data from the user.

That is, the multiple body part recognition device 100 may perform user authentication on an iris using only part of the iris, not the whole iris.

More specifically, the multiple body part recognition device 100 may recognize pattern information (feature points) related to the whole iris and compare the pattern information with previously registered biometric data and may also recognize pattern information on part of the iris (partial iris donut pattern) and compare the pattern information with previously registered biometric data. At this point, both the pattern information on the whole iris and the pattern information on part of the iris may be registered in a biometric data registration unit 30 described below.

Accordingly, although the iris part of the user 1 is partially exposed to the outside, authentication of the corresponding user 1 may be performed through the partial iris recognition function described above.

Meanwhile, when a face image of the user and an eye area image of the user are acquired from the user 1, the face recognition means 13 and the iris recognition means 14 may adjust an amount of light using a pulse-width modulation method. For example, a PWM driver (not shown) capable of adjusting an amount of light using a pulse-width modulation method according to an ambient light sensor (not shown), a light source (not shown) and illuminance information may be provided in the face recognition means 13 and the iris recognition means 14.

Accordingly, when an image is acquired from the user, noises may be reduced from the image as the amount of light is automatically adjusted according to the surrounding environments, and images of a predetermined resolution can be acquired.

In addition, when the user 1 approaches the multiple body part recognition device 100, the biometric data input unit 10 may further acquire a plurality of biometric data on a fingerprint and a palm vein from the body of the user 1 while the body of the user 1 is in a contactless state.

More specifically, the biometric data input unit 10 may further include a fingerprint recognition means 11 and a palm vein recognition means 12.

When the user 1 approaches the biometric data input unit 10, the fingerprint recognition means 11 may acquire a plurality of fingerprint data from the fingers of the user 1.

The fingerprint recognition means 11 may be provided with a plurality of fingerprint recognition cameras 111 and 113.

When the user 1 approaches the biometric data input unit 10, the plurality of fingerprint recognition cameras 111 and 113 may acquire at least two or more fingerprint data by photographing the fingers of the user 1.

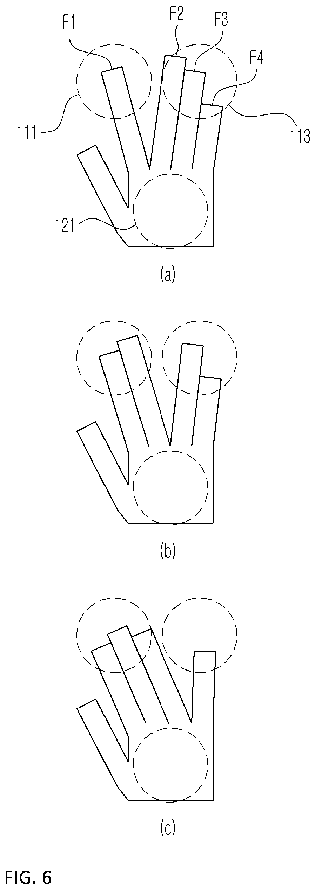

More specifically, the plurality of fingerprint recognition cameras 111 and 113 may include a first fingerprint recognition camera 111 for photographing fingerprints of a predetermined number of fingers except the thumb, and a second fingerprint recognition camera 113 for photographing fingerprints of fingers that are not photographed by the first fingerprint recognition camera 111 among the fingers except the thumb. For example, as shown in FIG. 6(c), when the first fingerprint recognition camera 111 photographs a first finger F1, a second finger F2 and a third finger F3 of the user 1, the second fingerprint recognition camera 113 may photograph the fingerprint of a fourth finger F4. Alternatively, as shown in FIG. 6(a), the first fingerprint recognition camera 111 may photograph only the fingerprint of the first finger F1, and the second fingerprint recognition camera 113 may photograph fingerprints of the second, third and fourth fingers F2, F3 and F4 of the user 1. In addition, as shown in FIG. 6(b), each of the first fingerprint recognition camera 111 and the second fingerprint recognition camera 113 may photograph fingerprints of two fingers. That is, the plurality of fingerprint recognition cameras 111 and 113 may simultaneously photograph fingerprints of four fingers except the thumb of the user 1 in a contactless state, in which a finger of the user is not contact with the multiple body part recognition device 100.

Accordingly, in the multiple body part recognition device 100, authentication of the user 1 can be performed through a plurality of fingerprint information. Here, as described above, the fingerprint recognition means 11 may be a plurality of fingerprint recognition cameras 111 and 113 themselves or may be a module including the plurality of fingerprint recognition cameras 111 and 113 and a processor (not shown) for processing image data acquired by the plurality of fingerprint recognition cameras 111 and 113.

Referring to FIGS. 1 and 2 again, when the user 1 approaches the biometric data input unit 10, the palm vein recognition means 12 may acquire palm vein data from the palm of the user 1.

The palm vein recognition means 12 may be provided with a palm vein recognition camera 121.

When the user 1 approaches the multiple body part recognition device 100, the palm vein recognition camera 121 may acquire palm vein data by photographing a palm of the user 1. Here, as described above, the palm vein recognition means 12 may be the palm vein recognition camera 121 itself or may be a module including the palm vein recognition camera 121 and a processor (not shown) for processing image data acquired by the palm vein recognition camera 121.

Meanwhile, the plurality of fingerprint recognition cameras 111 and 113 and the palm vein recognition camera 121 may be arranged in a triangular shape as shown in FIGS. 2 and 6.

More specifically, when a hand of the user 1 approaches in a contactless state, the plurality of fingerprint recognition cameras 111 and 113 may be arranged at a position relatively higher than the palm vein recognition camera 121 to photograph the fingers of the user 1 positioned at a position relatively higher than the palm. In addition, the palm vein recognition camera 121 may be arranged at a position relatively lower than the plurality of fingerprint recognition cameras 111 and 113 to photograph the palm of the user 1 positioned at a position relatively lower than the fingers.

Accordingly, when the user 1 approaches his fingers to the plurality of fingerprint recognition cameras 111 and 113 to input his or her biometric data into the biometric data input unit 10 of the multiple body part recognition device 100, the palm of the user 1 may be automatically arranged at a position facing the palm vein recognition camera 121.

In addition, the multiple body part recognition device 100 includes a biometric data identification unit 20.

Referring to FIG. 1, the biometric data identification unit 20 performs authentication of the user 1 by comparing a plurality of biometric data acquired from the biometric data input unit 10 with previously registered biometric data.

That is, the biometric data identification unit 20 may individually perform authentication on each biometric data inputted from the biometric data input unit 10 by simultaneously comparing two or more biometric data acquired from the biometric data input unit 10 with previously registered biometric data, and determine whether or not the user is authenticated by integrating the result of the authentication on each biometric data. Of course, a time difference may individually occur in the authentication process according to the type or amount of each biometric data of the user 1 registered in advance. In addition, the biometric data identification unit 20 may display the biometric data, starting from a biometric data identified first among the biometric data, to the outside through a display or the like so that a security manager may confirm.

Here, the biometric data identification unit 20 may perform authentication (← verification) of confirming the identity of a user through 1-to-1 matching or perform identification of finding a user 1 from a large number of persons through 1-to-N matching. That is, strictly speaking, authentication and identification are different concepts, which are selectively used according to an application area. However, in the present invention, the terms "authentication" and "identification" generally refer to a process of confirming or finding an identity of a user using biometric data, and it is preferable to interpret the terms in a broad sense.

Referring to FIGS. 1 and 2, the multiple body part recognition device 100 may further include a biometric data registration unit 30, an ID display unit 40, and a control unit 50.

The biometric data registration unit 30 is configured to be connected to the biometric data identification unit 20 through the control unit 50 described below, and biometric data of the user 1 may be registered in advance. Accordingly, the biometric data identification unit 20 may perform identification by comparing the biometric data acquired from the biometric data input unit 10 with the biometric data of the user 1 previously registered in the biometric data registration unit 30.

The ID display unit 40 is configured to be connected to the biometric data identification unit 20 through the control unit 50 and may display a result of identification on the biometric data of the user 1 identified by the biometric data identification unit 20 in terms of an ID. The security manager or the user 1 may confirm an identification result of the ID display unit 40.

The control unit 50 is connected to the biometric data input unit 10, the biometric data registration unit 30, the biometric data identification unit 20, and the ID display unit 40 and performs a function of controlling the operation of those.

In addition, the multiple body part recognition device 100 may further include a biometric data storage database 60.

The biometric data storage database 60 may store the biometric data registered in the biometric data registration unit 30 as a backup. That is, when a problem such as an intentional error, a hardware problem, a software problem, a theft, a computer virus, a cyber-terror, a disaster or the like occurs, the biometric information of the user 1 registered in the biometric data registration unit 30 may be lost. Accordingly, data registered in the biometric data registration unit 30 may be set to be periodically backed up in the biometric data storage database 60.

Here, the biometric data storage database 60 may be used as a tamper production function. That is, when the multiple body part recognition device 100 is separated from an external controller in which the multiple body part recognition device 100 will be installed, all the data registered in the biometric data registration unit 30 can be deleted. Contrarily, when the multiple body part recognition device 100 is connected to the controller again, the data backed up in the biometric data storage database 60 may be restored in the biometric data registration unit 30.

Accordingly, although the multiple body part recognition device 100 is lost due to a reason of theft or the like, loss of biometric data, which is personal information, can be prevented. That is, when the multiple body part recognition device 100 is separated from the external controller, all the data registered in the biometric data registration unit 30 are deleted, and thus the problem of leaking biometric data of the user 1 can be prevented. In addition, when the separated multiple body part recognition device 100 is connected again to the external controller, all the data backed up in the biometric data storage database 60 are restored in the biometric data registration unit 30, and inconvenience of inputting the biometric data again may not occur even when the multiple body part recognition device 100 is separated from the external controller by mistake or for the purpose of repair, management or the like and connected again.

In addition, the multiple body part recognition device 100 may further include an accommodation unit 70.

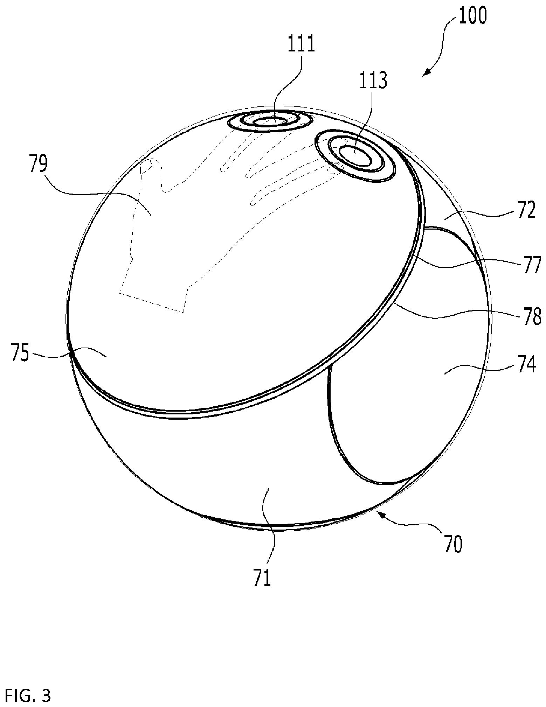

Referring to FIGS. 2 and 3, the accommodation unit 70 may be formed in a structure of accommodating the biometric data input unit 10, the biometric data identification unit 20, the biometric data registration unit 30, the ID display unit 40, and the control unit 50 therein.

More specifically, the accommodation unit 70 may be formed in a sphere shape, and an accommodation space may be formed inside thereof so that the biometric data input unit 10, the biometric data identification unit 20, the biometric data registration unit 30, the ID display unit 40, and the control unit 50 may be accommodated. However, the accommodation unit 70 is not limited to the sphere shape and may be changed and applied in various shapes as needed. For example, the biometric data input unit 10, the biometric data identification unit 20, the biometric data registration unit 30, the ID display unit 40, and the control unit 50 of the separated multiple body part recognition device 100 may be formed in the shape of a module to be accommodated in the accommodation unit 70.

In addition, the accommodation unit 70 may include a plurality of outer layers.

More specifically, the plurality of outer layers may be configured of a front side member 71, a rear side member 72, two side surface members 73 and 74 positioned on both sides, an upper member 75, and a lower member 76.

The front side member 71 and the rear side member 72 are disposed to face each other and may be formed in a curved surface shape to be formed in a sphere shape when they are combined with the side surface members 73 and 74, the upper member 75, and the lower member 76.

The two side surface members 73 and 74 may be installed detachably from the rear side member 72. Accordingly, a system manager may install the body part recognition module inside the accommodation unit 70 or maintain and repair the multiple body part recognition device 100 by opening the side surface members 73 and 74.

The upper member 75 may be attached in an area inclined at a predetermined angle in the vertical direction considering the convenience (accessibility) of the user. Accordingly, when a finger or a palm of the user 1 approaches the multiple body part recognition device 100, the user may maintain a more comfortable posture. For example, the upper member 75 may be formed in a half mirror structure.

In addition, a plurality of through holes 751 and 753 may be formed at one side of the upper member 75 located in an area inclined at a predetermined angle in the vertical direction. The lens unit of the plurality of fingerprint recognition cameras 111 and 113 installed in the accommodation unit 70 may be arranged in the plurality of through holes 751 and 753, respectively.

More specifically, the through holes 751 and 753 may include a first through hole 751 formed at one side to expose one side of the first fingerprint recognition camera 111, and a second penetration hole 753 formed at the other side to expose one side of the second fingerprint recognition camera 113. For example, the first fingerprint recognition camera 111 exposed to the outside through the first through hole 751 photographs fingerprints of a predetermined number of fingers among the fingers except the thumb, and the second fingerprint recognition camera 113 exposed to the outside through the second penetration hole 753 photographs fingerprints of fingers that are not photographed by the first fingerprint recognition camera 111 among the fingers except the thumb.

The lower member 76 is combined with the front side member 71 and the rear side member 72, and a communication hole 761 communicated with the accommodation space of the accommodation unit 70 may be formed at the center of the lower member 76 to connect the multiple body part recognition device 100 and an external controller.

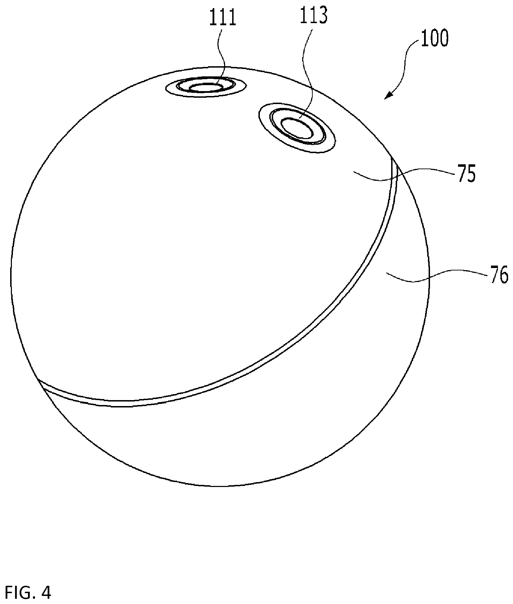

Here, although it is described in the embodiment described above that the accommodation unit 70 is configured of six members, the accommodation unit 70 is not limited thereto and may be changed and applied in more various forms. For example, as shown in FIG. 4, the upper member 75 and the lower member 76 of the accommodation unit 70 may be formed in a hemisphere shape, which are directly coupled and formed in a sphere shape.

In addition, the accommodation unit 70 may further include a fixing member 77.

Referring to FIG. 2, the fixing member 77 is formed in a ring shape and may be combined with the front side member 71, the rear side member 72, the side surface members 73 and 74, and the upper member 75, except the lower member 76. Here, a light source 78 of a ring shape may be installed between the upper member 75 and the fixing member 77. The light source 78 may have a functional effect of inducing a finger or a palm of the user 1, in addition to a decorative or aesthetical effect.

In addition, the accommodation unit 70 may further include a guide unit 79.

Referring to FIG. 4, the guide unit 79 showing an approach direction of a finger or a palm of the user 1 may be formed on the accommodation unit 70.

More specifically, the guide unit 79 may be formed on the surface of the upper member 75. Accordingly, the guide unit 79 shows an approach direction of a finger or a palm of the user 1 and may show the approach direction of a finger or a palm of the user 1 in a predetermined (e.g., a visual or tactile) guidance method. Accordingly, a finger or a palm of the user 1 may easily approach the multiple body part recognition device 100. For example, the guide unit 79 may be formed in a shape displaying a finger or a palm using the light source 78 or a transparent ink. In addition, the guide unit 79 may be displayed in a separate color or formed in a rough surface shape. In addition, an air discharge unit is provided in a portion where a finger or palm shape is displayed so that the user 1 may sense wind and is induced to approach the multiple body part recognition device 100. However, the guide unit 79 is not limited to the embodiment described above and may be changed and applied in various forms within a condition capable of implementing the same function.

Hereinafter, an entrance system using the multiple body part recognition device 100 will be described.

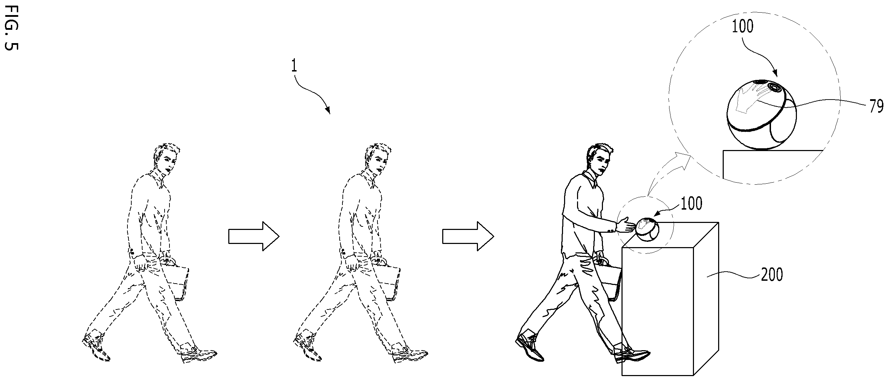

Referring to FIG. 5, an entrance system using the multiple body part recognition device 100 includes the multiple body part recognition device 100 as described above and a gate 200 for distinguishing a user 1 identified by the multiple body part recognition device 100 and permitting the user 1 to enter. For example, the gate 200 may be a means for physically controlling entrance of a user 1, such as a swing door or a sliding door, and its structure and shape are not specially limited.

Accordingly, the user 1 should prove the identity of the user 1 through the multiple body part recognition device 100 to pass through the gate 200, and when the process of authenticating the user 1 by the multiple body part recognition device 100 is completed, the user 1 may pass through the gate 200.

More specifically, the user 1 provides the multiple body part recognition device 100 with his or her biometric information to pass through the gate 200, and the multiple body part recognition device 100 may perform identification by comparing the biometric data acquired from the user 1 with previously registered biometric data of the user 1. For example, the user 1 looks at the multiple body part recognition device 100 while approaching his or her finger or palm to the multiple body part recognition device 100 in a contactless state to provide the multiple body part recognition device 100 with his or her biometric information. Accordingly, the biometric data input unit 10 provided in the multiple body part recognition device 100 may acquire biometric data of the user 1.

At this point, the multiple body part recognition device 100 may set various entrance permission conditions.

First, entrance may be permitted on the basis of any one of biometric data verified first among two or more biometric data. In this case, fast entrance permission is possible.

Next, it is also possible to permit entrance only when two or more biometric data are verified. In this case, the security condition is intensified, and the probability of entrance permission or security accidents by misrecognition is lowered.

In addition, setting of an entrance permission condition appropriately combining these two cases as described above is also possible. For example, when authentication is performed using a vein (palm vein) or an iris having a high accuracy, stability and security level of data, entrance may be permitted on the basis of only one of the biometric data, and alternatively, when authentication is performed using a face image having a comparatively low accuracy and stability level of data, a method of enhancing security by also requesting other biometric data, e.g., authentication based on a fingerprint or an iris, is possible. In addition to this, setting of various entrance permission conditions is possible considering a security request level, an authentication speed or the like.

Here, although the multiple body part recognition device 100 is described in the entrance system using the multiple body part recognition device 100 for the purpose of passing through the gate 200 (entrance security gate 200) for the convenience of explanation, it is not limited thereto and may be applied to all systems related to security.

Hereinafter, a contactless multiple body part recognition method using the multiple biometric data will be described.

For reference, reference symbols used for describing the multiple body part recognition device 100 are used for each configuration for describing the contactless multiple body part recognition method using the multiple biometric data, and duplicated descriptions will be omitted.

First, before describing the contactless multiple body part recognition method using the multiple body part recognition device 100, the process of registering biometric data using the multiple body part recognition device 100 will be described.

Referring to FIG. 1, a user 1 or a manager should register biometric data of the user 1 in the multiple body part recognition device 100. Registration of biometric data of the user 1 is basically a behavior of extracting and storing features of the user 1. All the biometric data of the user 1 acquired in this manner may be stored in the biometric data registration unit 30. All the biometric data of the user 1 registered in the biometric data registration unit 30 may be backup up in the biometric data storage database 60 for preservation of the data. The multiple body part recognition device 100 and the biometric data storage database 60 may be connected wiredly or wirelessly.

Next, the contactless multiple body part recognition method using multiple biometric data will be described.

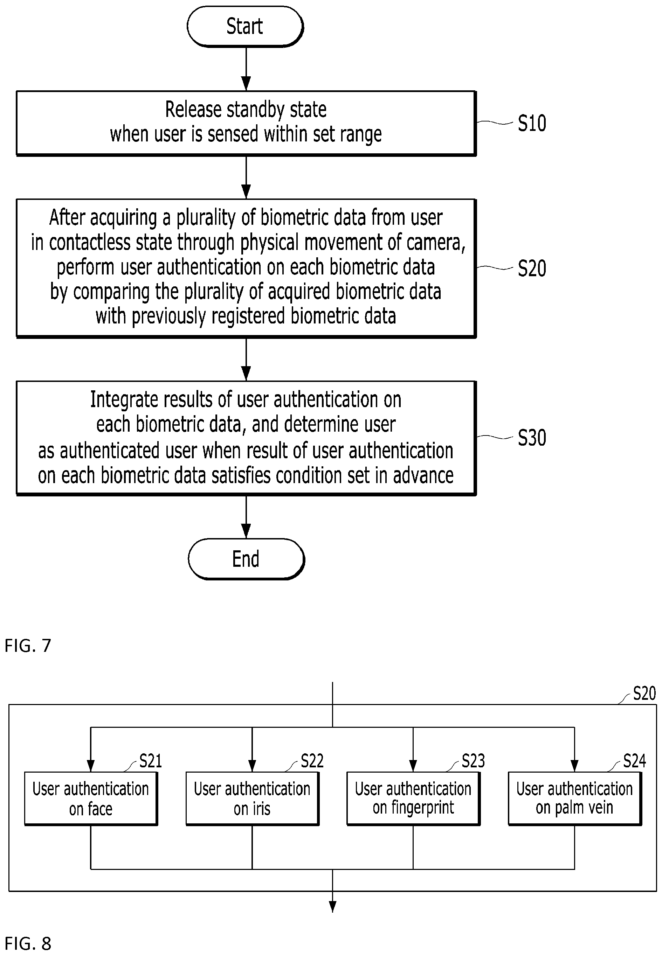

Referring to FIG. 7, when a user 1 is sensed within a preset measurable range, the multiple body part recognition device 100 releases a standby state (step S10).

When the standby state is released, the multiple body part recognition device 100 acquires a plurality of biometric data from the user 1 in a contactless state through physical movement of a camera, and performs user authentication on each biometric data by respectively comparing the acquired biometric data with previously registered biometric data (step S20). Here, the "physical movement of a camera" means both a state of moving the camera from one point to another point in a predetermined direction and a state of rotating the camera in a predetermined direction at a predetermined angle.

That is, when the user 1 is sensed, the multiple body part recognition device 100 may acquire a plurality of biometric data from the user 1 in a contactless state by moving the camera to a specific position or rotating the camera in a specific direction.

More specifically, when the user 1 is sensed within a range set in advance as shown in FIG. 8, the multiple body part recognition device 100 acquires biometric data on the face and biometric data on the iris from the user 1 in a contactless state through physical movement of the camera, compares the acquired biometric data with previously registered biometric data, and simultaneously performs user authentication on the biometric data (steps S21 and S22). Here, "simultaneously perform" does not only mean that a plurality of processes is performed in the same period of time, but also means that although there may be a time difference as a plurality of processes is individually processed, the processes are integrated and performed at a time from the aspect of total process.

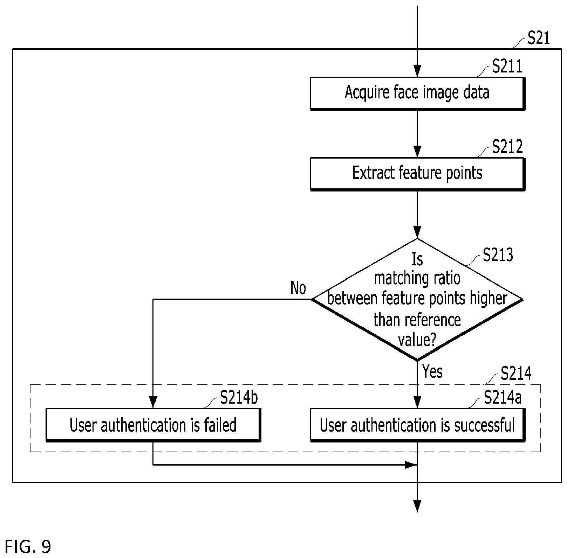

The user authentication process (steps S21 and S22) using biometric data on the face and the iris will be described in more detail with reference to FIGS. 9 to 12.

First, a user authentication process on the face (step S21) will be described.

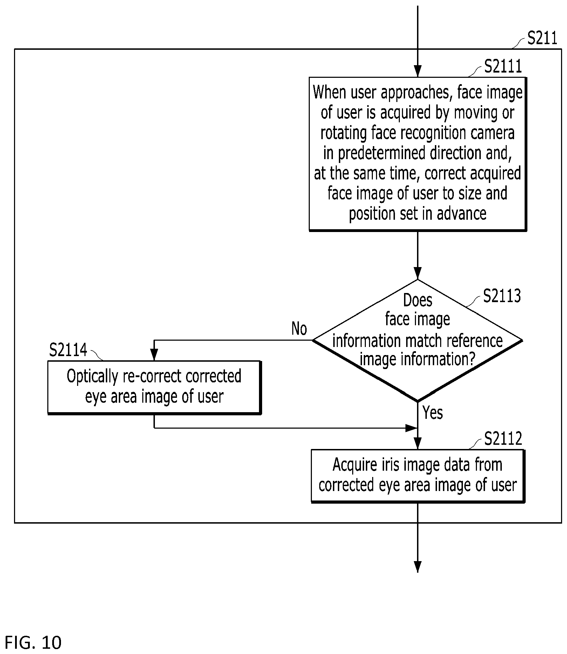

Referring to FIGS. 9 and 10, when a user 1 is sensed, the multiple body part recognition device 100 first acquires face image data from the user 1 (step S211).

More specifically, when the user 1 approaches, the multiple body part recognition device 100 acquires a face image of the user by moving or rotating the face recognition camera 131 in a predetermined direction and, at the same time, corrects the acquired face image of the user to a size and a position set in advance (step S2111). In addition, when the face image of the user is corrected as described above, the multiple body part recognition device 100 acquires face image data from the corrected face image of the user (step S2112).

Here, the multiple body part recognition device 100 may be provided with a pan-tilt driver 15 which can move or rotate the face recognition camera 131 in a predetermined direction.

The pan-tilt driver 15 may be formed in a structure capable of straightly moving forward, backward, left and right, as well as rotating left, right, up and down. For example, the pan-tilt driver 15 may be configured of a plurality of actuators (not shown) and a supporting structure (not shown) capable of supporting the face recognition camera 131.

Accordingly, when the user 1 approaches the multiple body part recognition device 100, the multiple body part recognition device 100 may automatically acquire a face image of the user by driving the pan-tilt driver 15, and the face image of the user acquired through the face recognition camera 131 may be corrected to a size and a position set in advance.

That is, although the user does not intentionally approach his or her face to the multiple body part recognition device 100, when the user 1 is positioned within a range set to be capable of acquiring biometric data, the multiple body part recognition device 100 may automatically acquire a face image of the user through physical (mechanical) movement or rotation of the face recognition camera 131 and, at the same time, correct the acquired face image of the user to a size and a position set in advance.

Meanwhile, the multiple body part recognition device 100 determines whether or not to re-correct the corrected face image of the user by comparing face image information on the corrected face image of the user with reference image information set in advance.

More specifically, when the face image of the user is corrected, the multiple body part recognition device 100 compares face image information on the corrected face image of the user with reference image information set in advance (step S2113). At this point, the multiple body part recognition device 100 is set to optically re-correct the corrected face image of the user through a plurality of lenses (not shown) provided in the face recognition camera 131 when the face image information does not match the reference image information (step S2114). For example, a plurality of lenses may be provided on the same axis inside the face recognition camera 131 in a structure capable of adjusting distance in the axis direction. In addition, a motor (not shown) coupled to a structure supporting the plurality of lenses may be provided inside the face recognition camera 131 to move the plurality of lenses in the axis direction by rotating the structure. Accordingly, the face recognition camera 131 may optically implement a zooming function.

That is, when resolution of the corrected face image of the user or the size of the image does not match a resolution or an image size set in advance, the multiple body part recognition device 100 may perform a re-correction process of enlarging or reducing a corresponding image by adjusting the distance between the lenses provided in each camera.

In addition, the multiple body part recognition device 100 may be set to adjust an amount of light using a pulse-width modulation method when the face image of the user is acquired.

That is, the multiple body part recognition device 100 is provided with a PWM driver (not shown) capable of adjusting an amount of light using a pulse-width modulation method according to an ambient light sensor (not shown), a light source (not shown) and illuminance information, and may adjust an amount of light using a pulse-width modulation method when a face image of the user is acquired.

Accordingly, when an image is acquired from the user, noises can be reduced from the image as the amount of light is automatically adjusted according to the surrounding environments, and images of a predetermined resolution can be acquired.

Next, the multiple body part recognition device 100 extracts feature points from the acquired face image data (step S212). For example, the feature points extracted from the face image data may include the distance between the body parts such as the eyes, nose, mouth, ears, eyebrows and the like, a size of each body part, a facial shape, shapes of the body parts and the like.

Finally, when extraction of feature points from the face image data is completed, the multiple body part recognition device 100 compares the feature points extracted from the face image data with feature points extracted from the previously registered biometric data (step S213) and determines whether or not the user authentication on the face is successful on the basis of a result of the comparison between the feature points (step S214).

That is, when the matching ratio of the feature points extracted from the face image data to the feature points extracted from the previously registered biometric data is equal to or higher than a preset reference value, the multiple body part recognition device 100 determines that the user authentication on the face is successful (step S214a), and contrarily, when the matching ratio of the feature points extracted from the face image data to the feature points extracted from the previously registered biometric data is lower than the preset reference value, the multiple body part recognition device 100 determines that the user authentication on the face is failed (step S214b).

Next, a user authentication process on the iris (step S22) will be described.

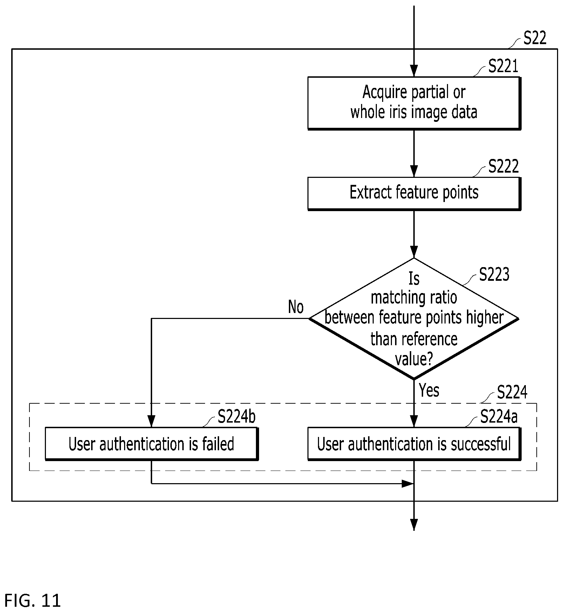

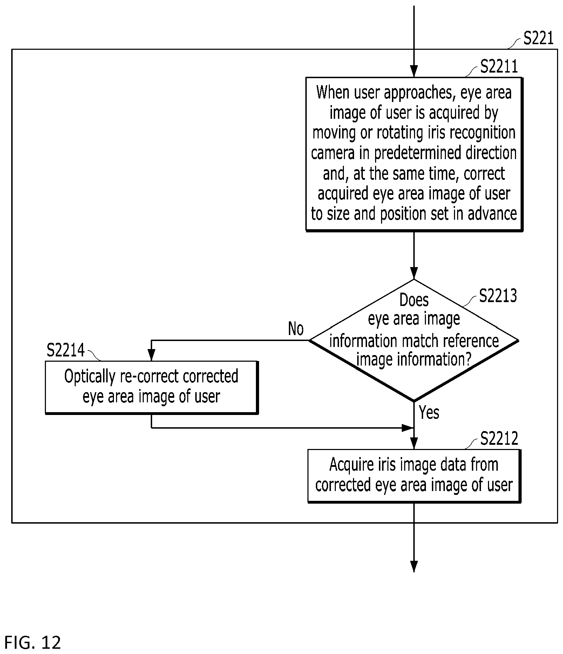

Referring to FIGS. 11 and 12, when a user 1 is sensed, the multiple body part recognition device 100 first acquires iris data from the user 1 (step S212).

More specifically, when the user 1 approaches, the multiple body part recognition device 100 acquires an eye area image of the user by moving or rotating the iris recognition camera 141 in a predetermined direction and, at the same time, corrects the acquired eye area image of the user to a size and a position set in advance (step S2211). In addition, when the eye area image of the user is corrected as described above, the multiple body part recognition device 100 acquires iris image data from the corrected eye area image of the user (step S2212).

Here, the multiple body part recognition device 100 may be provided with a pan-tilt driver 15 which can move or rotate the iris recognition camera 141 in a predetermined direction.

The pan-tilt driver 15 may be formed in a structure capable of straightly moving forward, backward, left and right, as well as rotating left, right, up and down. For example, the pan-tilt driver 15 may be configured of a plurality of actuators (not shown) and a supporting structure (not shown) capable of supporting the face recognition camera 131.

Accordingly, when the user 1 approaches the multiple body part recognition device 100, the multiple body part recognition device 100 may automatically acquire an eye area image of the user by driving the pan-tilt driver 15, and the eye area image of the user acquired through the iris recognition camera 141 may be corrected to a size and a position set in advance.

That is, although the user does not intentionally approach his or her eyes to the multiple body part recognition device 100, when the user 1 is positioned within a range set to be capable of acquiring biometric data, the multiple body part recognition device 100 may automatically acquire an eye area image of the user through physical (mechanical) movement or rotation of the iris recognition camera 141 and, at the same time, correct the acquired eye area image of the user to a size and a position set in advance.

At this point, the multiple body part recognition device 100 acquires partial or whole iris data from the user.

That is, the multiple body part recognition device 100 may perform user authentication using only part of or whole the iris.

More specifically, the multiple body part recognition device 100 may recognize pattern information (feature points) related to the whole iris and compare the pattern information with previously registered biometric data and also may recognize pattern information on part of the iris (partial iris donut pattern) and compare the pattern information with previously registered biometric data.

Accordingly, although the iris part of the user 1 is partially exposed to the outside, authentication of a corresponding user 1 may be performed through the partial iris recognition function described above.

Meanwhile, the multiple body part recognition device 100 determines whether or not to re-correct the corrected eye area image of the user by comparing eye image information on the corrected eye area image of the user with reference image information set in advance.

More specifically, when the eye area image of the user is corrected, the multiple body part recognition device 100 compares eye image information on the corrected eye area image of the user with reference image information set in advance (step S2213). At this point, the multiple body part recognition device 100 is set to optically re-correct the corrected eye area image of the user through a plurality of lenses provided in the iris recognition camera 141 when the eye image information does not match the reference image information (step S2214). For example, a plurality of lenses may be provided on the same axis inside the iris recognition camera 141 in a structure capable of adjusting distance in the axis direction. In addition, a motor (not shown) coupled to a structure supporting the plurality of lenses may be provided inside the iris recognition camera 141 to move the plurality of lenses in the axis direction by rotating the structure. Accordingly, the iris recognition camera 141 may optically implement a zooming function.

That is, when resolution of the corrected eye area image of the user or the size of the image does not match a resolution or an image size set in advance, the multiple body part recognition device 100 may perform a re-correction process of enlarging or reducing a corresponding image by adjusting the distance between the lenses provided in each camera.

In addition, the multiple body part recognition device 100 may be set to adjust an amount of light using a pulse-width modulation method when an eye area image of the user is acquired.

That is, the multiple body part recognition device 100 is provided with a PWM driver (not shown) capable of adjusting an amount of light using a pulse-width modulation method according to an ambient light sensor (not shown), a light source (not shown) and illuminance information and may adjust an amount of light using a pulse-width modulation method when an eye area image of the user is acquired.

Accordingly, when an image is acquired from the user, noises can be reduced from the image as the amount of light is automatically adjusted according to the surrounding environments, and images of a predetermined resolution can be acquired.

Next, the multiple body part recognition device 100 extracts feature points from the acquired iris data (step S222). For example, the feature points extracted from the iris data may include the distance between the patterns of the iris, a size and a shape of a pattern of a specific body part, and the like.

Finally, when extraction of feature points from the iris data is completed, the multiple body part recognition device 100 compares the feature points extracted from the iris data with feature points extracted from previously registered biometric data (step S223) and determines whether or not the user authentication on the iris is successful on the basis of a result of the comparison between the feature points (step S224) .

That is, when the matching ratio of the feature points extracted from the iris data to the feature points extracted from the previously registered biometric data is equal to or higher than a preset reference value, the multiple body part recognition device 100 determines that the user authentication on the iris is successful (step S224a), and contrarily, when the matching ratio of the feature points extracted from the iris data to the feature points extracted from the previously registered biometric data is lower than the preset reference value, the multiple body part recognition device 100 determines that the user authentication on the iris is failed (step S224b).

In addition, when the user 1 is sensed within a range set in advance, the multiple body part recognition device 100 may simultaneously acquire biometric data on the fingerprint and biometric data on the palm vein from the user 1, compare the acquired biometric data with previously registered biometric data, and further perform user authentication on the biometric data.

That is, user authentication on the fingerprint (step S23) and user authentication on the palm vein (step S24) may be simultaneously performed together with user authentication on the face (step S21) and user authentication on the iris (step S22).

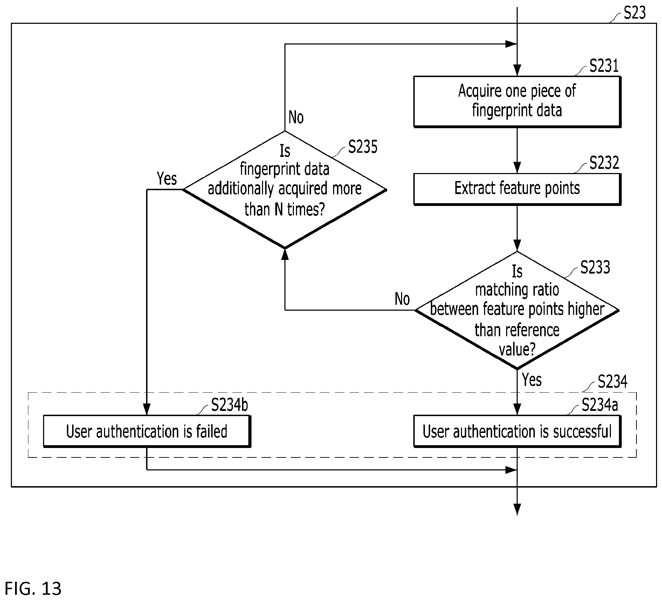

The process of performing user authentication using biometric data on the fingerprint and the palm vein will described in more detail with reference to FIGS. 13 to 14.

First, a user authentication process on the fingerprint (step S23) will be described.

Referring to FIG. 13, when a user 1 is sensed, the multiple body part recognition device 100 performs user authentication on the fingerprint (step S23).

More specifically, when a user 1 is sensed, the multiple body part recognition device 100 acquires one piece of fingerprint data from the user 1 (step S231) and extracts feature points from the acquired one piece of fingerprint data (step S232). Then, the multiple body part recognition device 100 compares the feature points extracted from the one piece of fingerprint data with feature points extracted from previously registered biometric data in real-time (step S233), and determines whether or not the user authentication on the fingerprint is successful on the basis of a result of the comparison between the feature points (step S234).

Here, the one piece of fingerprint data may be configured of a plurality of group fingerprint information including fingerprint information on at least one or more fingers.

The plurality of group fingerprint information may be formed of first group fingerprint information acquired from the first fingerprint recognition camera 111 and second group fingerprint information acquired from the second fingerprint recognition camera 113. That is, the multiple body part recognition device 100 may be provided with the first fingerprint recognition camera 111 and the second fingerprint recognition camera 113.

Accordingly, the plurality of group fingerprint information may be formed of a first fingerprint data (FIG. 6(a)) including fingerprint information on a first finger F1 and fingerprint information on second to fourth fingers F2, F3 and F4, a second fingerprint data (FIG. 6(b)) including fingerprint information on the first finger and the second finger F1 and F2 and fingerprint information on the third finger and the fourth finger F3 and F4, a third fingerprint data (FIG. 6(c)) including fingerprint information on the first to third fingers F1 to F3 and fingerprint information on the fourth finger F4. However, the plurality of group fingerprint information is not limited to the embodiment described above and may be changed in more various methods.

Meanwhile, the multiple body part recognition device 100 is set to additionally acquire one piece of fingerprint data from the user 1 when feature points extracted from one piece of fingerprint data are compared with feature points extracted from previously registered biometric data in real-time and the matching ratio of the feature points extracted from the one piece of fingerprint data to the feature points extracted from the previously registered biometric data is lower than a preset reference value.

That is, the multiple body part recognition device 100 additionally acquires one piece of fingerprint data from the user 1 when the matching ratio between the feature points is lower than a preset reference value. For example, the preset reference value may be randomly set by a manager.

In addition, when it needs to additionally acquire one piece of fingerprint data from the user 1, the multiple body part recognition device 100 compares the number of times of additionally acquiring one piece of fingerprint data from the user with a preset number (step S235).

Accordingly, when the feature points extracted from one piece of fingerprint data are compared with the feature points extracted from the previously registered biometric data in real-time and the matching ratio of the feature points extracted from the one piece of fingerprint data to the feature points extracted from the previously registered biometric data is equal to or higher than a preset reference value, the multiple body part recognition device 100 determines that the user authentication on the fingerprint is successful (step S234a). Contrarily, when it needs to additionally acquire one piece of fingerprint data from the user 1, the multiple body part recognition device 100 compares the number of times of additionally acquiring one piece of fingerprint data with a preset number, and when the number of times of additionally acquiring one piece of fingerprint data from the user 1 is equal to or larger than the preset number, the multiple body part recognition device 100 determines that the user authentication is failed (step S234b).

Next, a user authentication process on the palm vein (step S24) will be described.

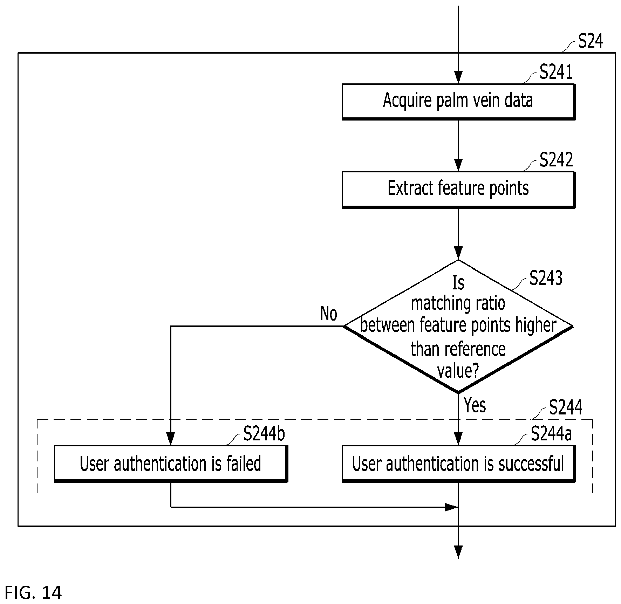

Referring to FIG. 14, when body part information of a user 1 is sensed, the multiple body part recognition device 100 simultaneously performs user authentication on the fingerprint (step S23) and user authentication on the palm vein (step S24).

More specifically, when body part information of a user 1 is sensed, the multiple body part recognition device 100 acquires palm vein data from the user 1 (step S241) and extracts feature points from the acquired palm vein data (step S242). Then, the multiple body part recognition device 100 compares the feature points extracted from the palm vein data with feature points extracted from previously registered biometric data (step S243) and determines whether or not the user authentication on the palm vein is successful on the basis of a result of the comparison between the feature points (step S244) .

Accordingly, when the feature points extracted from palm vein data are compared with the feature points extracted from the previously registered biometric data and the matching ratio of the feature points extracted from the palm vein data to the feature points extracted from the previously registered biometric data is equal to or higher than a preset reference value, the multiple body part recognition device 100 determines that the user authentication on the palm vein is successful (step S244a), and contrarily, when the matching ratio of the feature points extracted from the palm vein data to the feature points extracted from the previously registered biometric data is lower than the preset reference value, the multiple body part recognition device 100 determines that the user authentication on the palm vein is failed (step S244b).

Referring to FIG. 7 again, when the user authentication on each biometric data is completed, the multiple body part recognition device 100 integrates the result of the user authentication on each biometric data and determines the user 1 as an authenticated user when the result of user authentication on each biometric data satisfies authentication conditions set in advance (step S30).

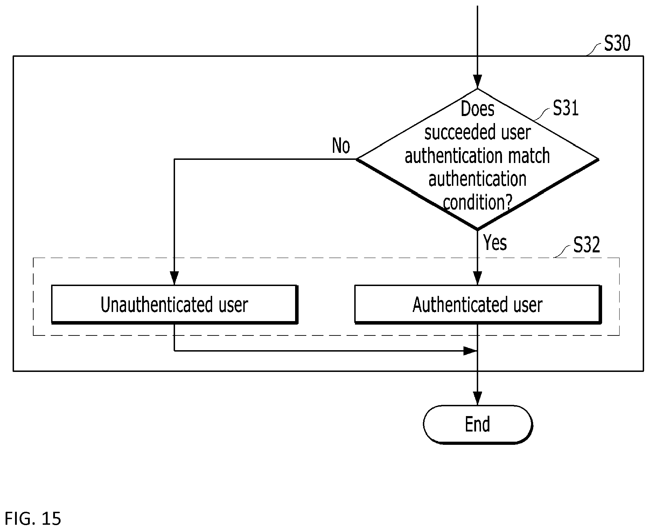

More specifically, referring to FIG. 15, when the user authentication on each biometric data is completed, the multiple body part recognition device 100 confirms whether a result of successful user authentication matches a user authentication condition set in advance (step S31). For example, the user authentication condition set in advance may be set to include various conditions such as a user authentication condition based on a piece of biometric data, a user authentication condition based on a plurality of biometric data, a user authentication condition based on a plurality of biometric data including a piece of specified biometric data, and a user authentication condition based on a plurality of biometric data including a plurality of specified biometric data.

In addition, the multiple body part recognition device 100 determines whether or not the user is authenticated according to whether a result of successful user authentication matches a user authentication condition set in advance (step S32) .

That is, when a result of successful user authentication matches a user authentication condition set in advance, the multiple body part recognition device 100 determines the user 1 as an authenticated user, and contrarily, when a result of successful user authentication does not match a user authentication condition set in advance, the multiple body part recognition device 100 determines the user 1 as an unauthenticated user.

As described above, in the embodiments of the present invention, recognition and identification of a plurality of body parts can be simultaneously performed by combining independent body part recognition techniques, and an aesthetically superior and user-friendly user interface can be provided.

In addition, time consumption or inconveniences occurring in the biometric data registration or identification process can be reduced, and psychological resistance occurring in the body part recognition process can be reduced. Particularly, as the internal devices are not shown to the user 1, while having a high biometric information recognition rate, a multiple body part recognition device 100 with reduced resistance or discomfort can be provided.

In addition, as a face image of a user 1 is corrected to a recognizable state by physically moving or rotating the cameras photographing the face and the iris of the user using a pan-tilt driver 15, face and iris images of the user 1 can be acquired to have a fixed location and size in any situation regardless of movement or a posture of the user 1, and the problems of resolution degradation, image distortion and the like can be prevented.

In addition, as iris data can be wholly or partly acquired in the iris recognition process, the security function can be enhanced by applying the same security standard to all users regardless of physical defects of a user 1.

In addition, when the face and the iris of a user 1 are photographed, resolution and brightness of the images can be constantly maintained at all times by adjusting the amount of light using a pulse-width modulation method according to the size and position of the images.

In addition, as the user identification is performed when a biometric data is inputted from the user 1, the probability of user identification failure can be lowered and speedy user identification can be accomplished by comparing all the biometric data acquired from the body of the user 1 with previously registered biometric data in real-time.

The above description of the present invention is for exemplary purposes, and it can be understood by those skilled in the art that the present invention may be easily embodied in other specific forms without departing from the spirit and essential features thereof. The embodiments described above are therefore to be considered in all respects as illustrative and not restrictive. For example, each constitutional element described as an individual form may be embodied to be distributed, and in the same manner, constitutional elements described as being distributed may also be embodied in an aggregated form.

The scope of the present invention is defined by the accompanying claims, and the meaning and scope of the claims and all changes and modifications derived from equivalents thereof should be interpreted as being included in the scope of the present invention.

The modes for the embodiments of the present invention are described together in the best mode for carrying out the present invention.

### INDUSTRIAL APPLICABILITY

The present invention relates to a contactless multiple body part recognition method, and since the method can be applied to various authentication systems and has repeatability, it has industrial applicability.

## Claims

1. A contactless multiple body part recognition method comprising the steps of:
acquiring a plurality of biometric data from a user in a contactless state when the user is sensed within a preset measurable range, and performing user authentication on each biometric data by comparing the acquired biometric data with previously registered biometric data; and
integrating a result of the user authentication on each biometric data and determining the user as an authorized user when the result of the user authentication on each biometric data satisfies a condition set in advance, wherein
the step of acquiring biometric data from a user in a contactless state when the user is sensed within a preset measurable range, and performing user authentication on each biometric data by comparing the acquired biometric data with previously registered biometric data includes the step of acquiring, when the user approaches, biometric data on a face and an iris from the user in a contactless state through physical movement of a camera.

2. The method according to claim 1, wherein the step of acquiring biometric data from a user in a contactless state when the user is sensed within a preset measurable range, and performing user authentication on each biometric data by comparing the acquired biometric data with previously registered biometric data includes the steps of:
acquiring biometric data on the face from the user and comparing the acquired biometric data with previously registered biometric data; and
acquiring biometric data on the iris from the user and comparing the acquired biometric data with the previously registered biometric data, wherein
the step of acquiring biometric data on the face from the user and comparing the acquired biometric data with previously registered biometric data and the step of acquiring biometric data on the iris from the user and comparing the acquired biometric data with the previously registered biometric data are performed at the same time.

3. The method according to claim 2, wherein the step of acquiring biometric data on the face from the user and comparing the acquired biometric data with previously registered biometric data includes the steps of:
acquiring face image data from the user;
extracting feature points from the face image data;
comparing the feature points extracted from the face image data with feature points extracted from the previously registered biometric data; and
determining whether or not the user authentication on a face image is successful on the basis of a result of the comparison between the feature points.

4. The method according to claim 3, wherein the step of acquiring face image data from the user includes the steps of:
acquiring, when the user approaches, the face image of the user by moving or rotating a face recognition camera in a predetermined direction and, at the same time, correcting the acquired face image of the user to a size and a position set in advance; and
acquiring the face image data from the corrected face image of the user.

5. The method according to claim 4, wherein the step of acquiring face image data from the user is set to compare face image information on the corrected face image of the user with reference image information set in advance, and optically recorrect the corrected face image of the user through a plurality of lenses provided in the face recognition camera when the face image information does not match the reference image information.

6. The method according to claim 4, wherein the step of acquiring face image data from the user is set to adjust an amount of light using a pulse-width modulation method when the face image of the user is acquired.

7. The method according to claim 2, wherein the step of acquiring biometric data on the iris from the user and comparing the acquired biometric data with the previously registered biometric data includes the steps of:
acquiring partial or whole iris data from the user;
extracting feature points from the iris data;
comparing the feature points extracted from the iris data with feature points extracted from the previously registered biometric data; and
determining whether or not the user authentication on the iris is successful on the basis of a result of the comparison between the feature points.

8. The method according to claim 7, wherein the step of acquiring partial or whole iris data from the user includes the steps of:
acquiring, when the user approaches, an eye area image of the user by moving or rotating an iris recognition camera in a predetermined direction and, at the same time, correcting the acquired eye area image of the user to a size and a position set in advance; and
acquiring the iris data from the corrected eye area image of the user.

9. The method according to claim 8, wherein the step of acquiring partial or whole iris data from the user is set to compare eye image information on the corrected eye area image of the user with reference image information set in advance, and optically recorrect the corrected eye area image of the user through a plurality of lenses provided in the iris recognition camera when the eye image information does not match the reference image information.

10. The method according to claim 9, wherein the step of acquiring partial or whole iris data from the user is set to adjust an amount of light using a pulse-width modulation method when the eye area image of the user is acquired.

11. The method according to claim 1, wherein the step of integrating a result of the user authentication on each biometric data and determining the user as an authorized user when the result of the user authentication on each biometric data satisfies a condition set in advance includes the steps of:
confirming whether a result of successful user authentication matches a user authentication condition set in advance; and
determining whether or not the user is authenticated according to whether a result of successful user authentication matches a user authentication condition set in advance.

12. A multiple body part recognition device comprising:
a biometric data input unit for acquiring a plurality of biometric data from a user in a contactless state when the user approaches; and
a biometric data identification unit for performing user authentication by comparing the plurality of biometric data acquired from the biometric data input unit with previously registered biometric data, wherein
the biometric data input unit acquires a plurality of biometric data on a face and an iris from the user through physical movement of a camera when the user approaches.

13. The device according to claim 12, wherein the biometric data identification unit individually performs authentication on each biometric data by simultaneously comparing the plurality of biometric data with previously registered biometric data, and determines whether or not the user is authenticated by integrating the result of the authentication on each biometric data.

14. The device according to claim 12, wherein the biometric data input unit includes:
a face recognition means provided with a face recognition camera capable of acquiring face image data by photographing the face of the user when the user approaches the biometric data input unit; and
an iris recognition means provided with an iris recognition camera capable of acquiring iris data by photographing an eye of the user when the user approaches the biometric data input unit.

15. The device according to claim 14, wherein the face recognition means and the iris recognition means are provided with a pan-tilt driver capable of moving or rotating the face recognition camera and the iris recognition camera in a predetermined direction, respectively, and when the user approaches the biometric data input unit, the face recognition means and the iris recognition means automatically acquire a face image of the user and an eye area image of the user by driving the pan-tilt driver, wherein
the acquired face image and eye area image of the user are corrected to a size and a position set in advance.

16. The device according to claim 14, wherein the iris recognition means acquires partial or whole iris data from the user.

17. The device according to claim 15, wherein the face recognition means and the iris recognition means adjust an amount of light using a pulse-width modulation method when the face image of the user and the eye area image of the user are acquired.

18. The device according to claim 12, further comprising:
a biometric data registration unit for registering the biometric data in advance;
an ID display unit for displaying a result of identification of the biometric data identification unit as an ID;
a control unit for controlling the biometric data input unit, the biometric data identification unit, the biometric data registration unit, and the ID display unit; and
an accommodation unit for accommodating the biometric data input unit, the biometric data identification unit, the biometric data registration unit, the ID display unit, and the control unit therein.
